# EUROPEAN PATENT APPLICATION

(11) **EP 1 280 371 A2**
(43) Date of publication of application: **29.01.2003**
(21) Application number: 02016084.2
(22) Date of filing: 19.07.2002
(51) Int. Cl.: H04Q 7/38

(54) **Handover control method in mobile communication networks, relevant system and data processing product**

(30) Priority: 27.07.2001 IT MI20011629
(71) Applicant: Siemens Mobile Communications S.p.A., 20126 Milano (IT)
(72) Inventor: Fumagalli, Sergio, 20069 Vaprio D'Adda (IT); Porati, Ferruccio, 20037 Paderno Dugnano (IT); Rossetti, Mario, 20060 Masate (IT)
(74) Representative: Giustini, Delio

(57) **Abstract**

The handover method is implemented by a mobile station (MT) in a first time slot (t0, t1) and in a second time slot (t1, t2) in which the mobile station is connected, on a first channel destined to be abandoned due to the handover operation and on a second channel, respectively, destined to be reached due to the handover action. The transmission of the voice signal on the first channel is kept during the first time slot (t0, t1) producing a continuity solution in the voice signal (VS) only during the second time slot (t1, t2).

## Description

### Field of the invention

The present invention relates to mobile communication networks organized according to a cellular structure.

When a mobile station involved in a circuit switching call moves inside a network of this type, it is necessary to assure the communication also during the phases in which the mobile station leaves a given cell to connect on an adjacent cell. The relevant mobility control method, currently called "handover", has the purpose to assure the service quality avoiding unwanted interruptions.

The handover method can be controlled either by the Base Station Controller (BSC) or by the Mobile Switching Center (MSC).

To this purpose it could be appreciated that in the frame of the present description - and, as the case maybe, in the following claims - the main functional modules reference to which is made, shall be mainly identified with their current English name and/or the corresponding acronym. This choice is due to the fact that said descriptions/acronyms are those currently adopted by those skilled in the art all over the world. The choice to refer to descriptions/acronyms in the English language satisfies therefore an essential requirement of clear and simple description.

The channel switching in the handover phase can be tied both to the same cell (intracell handover) and to a different cell (intercell handover).

In the case of a BSC controlled handover, the quality of the voice signal results worst than the case of a handover controlled by the MSC. This situation - which can be noticed in traditional systems - is due to the different ways the transition between the "old" channel and the "new" channel is controlled.

In general, in the MSC controlled handover, a "three-way" link connection is used; therefore the "old" channel is disengaged only when the "new" channel has a correct operation. This operation way manages that users do not distinguish a continuity solution in the voice signal.

In the case of handover controlled at BSC level, a simpler solution is adopted. Essentially, the BSC is a connection matrix susceptible to be switched according to a well-defined method. This method foresees that - at a given time instant - the old channel is actually interrupted to proceed then - at a later time instant - to the establishment of the "new" channel.

This situation originates a continuity solution in the voice signal corresponding to an actual "gap" or "hole" in the handover phase.

Of course, the transition results as less perceptible as it is fast: in fact, the ear behaves as a sort of low pass filter, and therefore the sensitivity to the phenomenon depends, at least to a given extent, on the perception del single user. On the other hand it is important to assure the integrity of the words during the handover phase.

For a more general description of the implementation details of the handover phase in a mobile telephone network useful reference can be made, for instance, to the technical specifications of the GSM standard (GSM Technical Specifications). In any case, these specific implementation details are not in themselves significant to the purposes of the comprehension of the implementation of the present invention.

The significant fact here is that when a handover is made, it is necessary to enable a new channel on the "target" cell (target cell). The switching on a new channel means to enable a transmitter and a TRAU (that is a Transcoding Unit) that must be ready to control the voice signal frames.

### Background art

In the traditional solutions, the base station subsystem (or BSS) is configured in such a way to implement in parallel the synchronization between TRAU and BTS as well as the transfer of the mobile station towards the new channel.

The method is enabled by some trigging events or "triggers". In particular, after the receipt of a HO Cmd message (acronym for HANDOVER COMMAND), in the case of intercell handover, or of an Ass Cmd message (ASSIGNMENT COMMAND), in the case of intracell handover, the switching matrix is located on a new connection while the mobile station attempts to have access to the new channel; in case it is successful, an additional delay must be added for the exchange between BTS and TRAU of TRAU frames on the new channel.

The global effect on the call is a 500-600 milliseconds gap (muting) in the voice signal in the case of a successful normal intercell handover for a full rate call.

Should the handover not be successful, considering that the switching matrix must be newly relocated in the "old" position, the total result is the addition of another similar muting period: in this case, the continuity solution in the voice signal extends for values double than those previously considered and is clearly perceptible with a negative effect.

### Scope and summary of the invention

Scope of the present invention is to offer a solution capable of overcoming the above-mentioned drawbacks.

According to the present invention, the purpose is attained thanks to a method having the characteristics specifically recalled in the following claims. The invention refers also to the relevant system, as well as to the relevant data processing product, that is to the data processing product that can be directly loaded in the memory of a computer and including software code portions susceptible to implement the method according to the invention when the product is run on said computer.

In practice, the solution according to the invention is based on the acknowledgement of the fact that, after having received the above-mentioned signals enabling the handover, the mobile station takes a long time to switch on a new channel, while the time necessary to transfer the TRAU frames on the new channel is globally shorter (e.g. 100 milliseconds). Therefore, it results advantageous to maintain the connection on the old channel open as long as possible before switching towards the new one: in this way, the frames of voice signal insist on the "old" cell until the "new" channel is perfectly established, synchronized and engaged by the mobile station. In practice, the positioning of the switching matrix on the "new" channel is redefined on the basis of new events resulting practically delayed.

Delaying the matrix relocation it is possible to reduce the time slot during which the mobile station does not receive any valid signal from the network. In the meantime, the old channel continues carrying frames of valid voice signal while, in parallel, the mobile station proceeds to regulate the new channel.

Delaying the switching matrix relocation as described it is possible, in normal conditions, to reduce the handover gap down to 150-250 millisecond values, succeeding, in a particularly preferred embodiment of the invention, in completely eliminating it.

In addition to the above, in the case the handover is unsuccessful, the switching matrix is never shifted and, in this case, there is no mute period or handover gap.

### Brief description of figures

The invention shall be now described with reference to the attached drawings, in which:
- Figure **1** shows, for reference only, the typical organization of a GSM cellular network,
- Figure **2**, including two parts denoted 2a and 2b, respectively, shows the performance mode of the handover method in a traditional system (figure 2a) and in a system operating according to the invention (figure 2b),
- Figure **3**, including two parts denoted 3a and 3b, respectively, shows also in this case, the situation that determines should the handover method is not successful, making reference both to a traditional system (figure 3a) and to a system according to the invention (figure 3b); and
- Figure **4** refers to a preferred embodiment of the invention such to eliminate the speech gap.

### Detailed description of a preferred embodiment of the invention

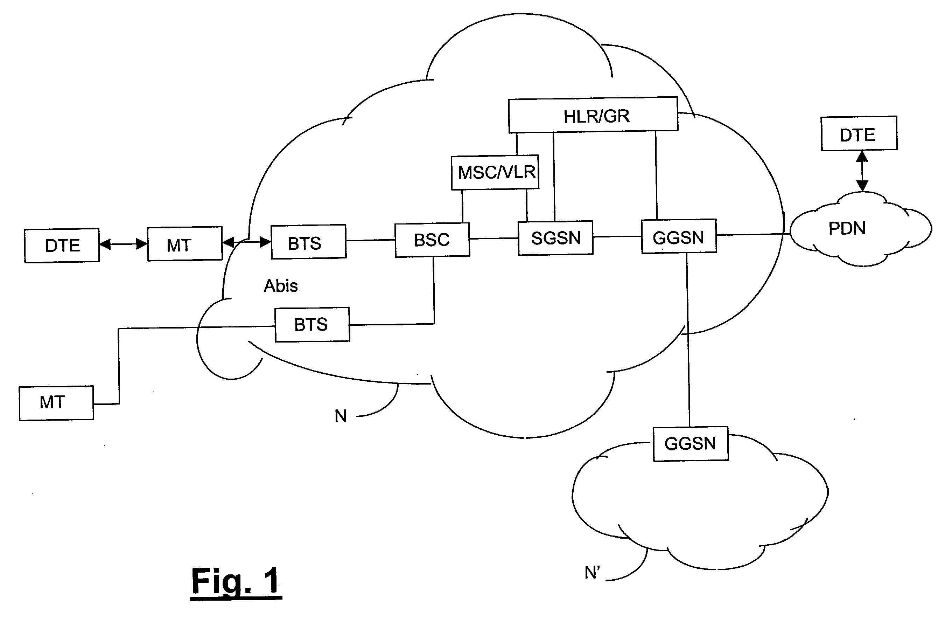

The diagram of figure 1 shows in general terms the structure of a GSM network. This structure has to be considered well-known and therefore such not to require a detailed description in this phase.

Therefore we shall indicate below only the brief description of the different acronyms used to indicate the relevant functional modules:

| | |
|---|---|
| DTE | Data Terminal Equipment |
| MT | Mobile Terminal |
| BSS | Base Station Subsystem |
| BTS | BSS Transmission Subsystem |
| BSC | Base Station Controller |
| MSC | Mobile Switching Center |
| VLR | Visitor Location Register |
| HLR | Home Location Register |
| GR | GPRS Register |
| SGSN | Supporting GPRS Service Node |
| GGSN | Gateway GPRS Service Node |
| PDN | Public Data Network |

Always in the same diagram, references N and N' indicate a public network PLMN controlled by the same operator of the GSM network and an external PLMN network, that is of another operator.

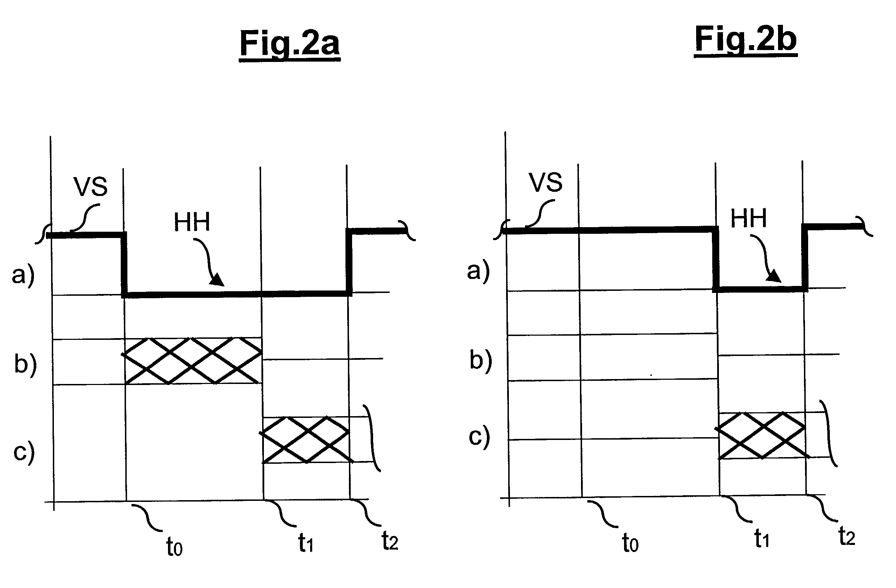

Proceeding to examine figure 2 it could be noticed that both part 2a (relevant to the known technique) and figure 2b (relevant to the invention) show the trend of three signals a, b, and c, according to the time t (x-axis) as respectively corresponding
- to the presence/absence of the voice signal VS on the connection (present, in case of "high" signal, and absent, in case of "low" signal),
- to the location of the mobile station (MS) on the "old" channel, and
- to the location of the mobile station on the "new" channel.

Obviously, for old channel and new channel are intended - respectively:
- the first channel on which the mobile station is connected before the handover method, and
- the second channel on which the mobile station is connected after the handover method.

In practice, with reference to figure 2a, the development of the handover method - either intracell or intercell - is enabled by the mobile station at an instant t0 (instant at which the mobile station MT starts the handover method) to continue then up to an instant t1 (instant at which the mobile station ends the actual handover method switching from the "old" channel to the "new" channel) and then still at a time instant t2 (which is the instant at which the correct time alignment between BTS and TRAU is reached).

In the solutions according to the known technique, the transmission of the voice signal VS is actually interrupted for the whole time slot included between instant t0 and instant t2 (interval of the total duration 500-600 milliseconds) originating the phenomenon known as handover gap or "speech gap", indicated in the figures with HH.

In the solution according to the invention (solution to which figure 2b refers), the time instants t0, t1 and t2 keep the same meaning.

The important difference (notice first of all parts b and c of chronograms of figures 2a and 2b) is in the fact that, in the solution according to the invention, the voice speech is kept - availing of the "old" channel - up to instant t1. Consequently, the "speech gap" HH is actually limited to the separation interval between instants t1 and t2, interval having duration in the range of 150-250 milliseconds.

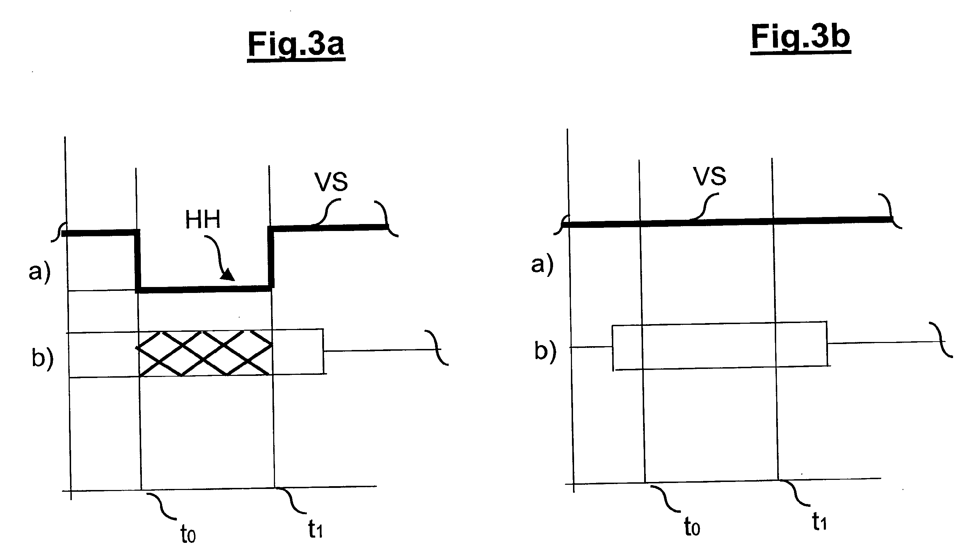

Figures 3a and 3b show, adopting the same formalism what happens in the case in which the handover method is not successful; this always making reference in a compared way to the solution according to the known technique (figure 3a) and to the solution according to the invention (figure 3b).

In practice, in the solutions according to the known technique, at instant t0 in which the mobile station starts the handover method, the transmission of the voice signal is discontinued to be restarted only at instant t1, that is when the mobile station ends the handover method, acknowledging that the same was unsuccessful. The total result is, also in this case, a continuity solution HH in the voice signal VS having 350-450 milliseconds duration.

On the contrary, adopting the solution according to the invention (figure 3b) the transmission of the voice signal VS is not interrupted during the interval included between instant t0 and instant t1: the switching matrix is therefore kept on the "old" channel for the whole subject interval.

Even if the handover method is unsuccessful, we have no continuity solutions in the transmission of the voice signal VS.

Examining more in detail the possible application of the invention to a GSM context, the determining events to the purposes of the switching matrix relocation can be summarized as follows.

### Intracell Handover

The significant event for the passage of the switching matrix is shifted from the sending of the ASSIGNMENT COMMAND message to the reception of the ESTABLISH INDICATION message.

In practice, on sending of the ASSIGNMENT COMMAND message the network starts the channel assignment method sending an ASSIGNMENT COMMAND message to the mobile station on the main signalling connection. The ASSIGNMENT COMMAND message contains the description of the new configuration (see the GSM TS04.08 standard).

The ESTABLISH INDICATION message is sent by the BTS module towards the BSC module to indicate the occurred establishment of a connection on the radio link layer in a multiframe mode, enabled by a mobile station (see the GSM TS08.58 standard).

Since the switching of the matrix is made on receipt of the ESTABLISH INDICATION message, should the handover not be successful, a switching on the old channel is not necessary: this because the switching is made only when the mobile station has connected on the new channel.

### Intercell Handover

The new significant event is shifted in this case by the sending of the HANDOVER COMMAND message on reception of the HANDOVER DETECTION message.

The network starts the handover method sending the HANDOVER COMMAND message towards the mobile station on the main DCCH (see the GSM TS04.08 standard).

In the case of an asynchronous handover, the BTS module builds the PHYsical Data processing message as specified in the GSM 04.08 standard and sends the message to the mobile station on the main signalling connection in an unacknowledged way, starting also a timer (T3105). The HANDOVER DETECTION message is sent to the BSC module. This method is used between the target BTS module, that is the destination BTS module and the BSC module when a mobile station subject to handover has enters the new BTS module. The method is enabled by the BTS module when a mobile station is detected on a channel enabled for the handover (see the GSM TS08.58 standard).

Considering that the matrix switching is made on the receipt of the HANDOVER DETECTION message, whenever the handover is unsuccessful, the action of the matrix relocation on the old channel shall be made only if the BSC module has already received the HANDOVER DETECTION message and the ESTABLISH INDICATION message on the new channel has not yet been received.

Concerning the control of time alignment, we know that, when enabling a new channel, a given time slot is required in order that both the BTS module and the TRAU module exchange the TRAU frames on the new channel. This time slot can be short, if the TRAU module does not foresee any time alignment function for the new channel, that is, in a narrow sense, it remains in "Static Time Alignment" conditions, waiting for and immediately confirming the first request for time alignment coming from the BTS module.

In the worst instance, the first TRAU frame is discarded and the second is acknowledged, which involves a delay in the range of 19.5 milliseconds.

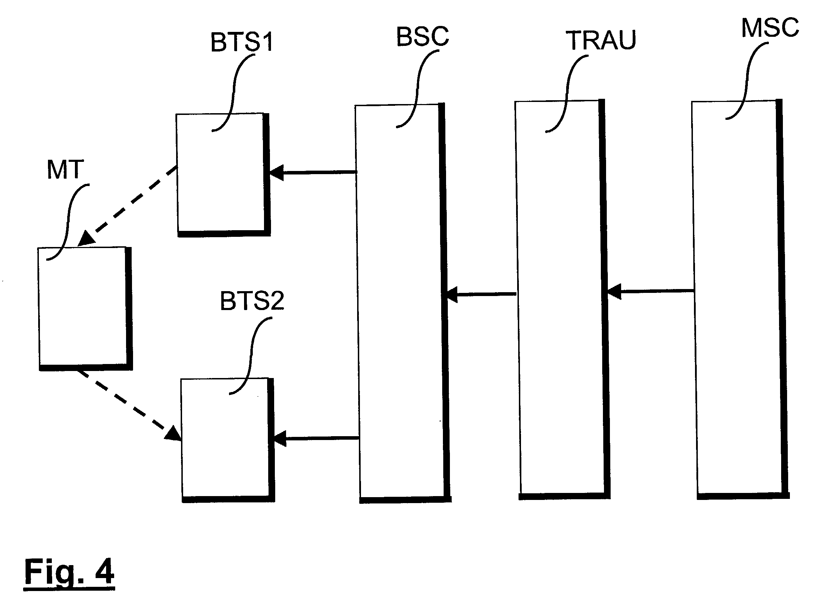

The diagram of figure 4 shows and additional improvement of the invention aiming not only at reducing, but virtually completely eliminating the continuity solution of the voice signal in case of handover.

In particular, the solution shown in figure 4 foresees that during the handover methods (both intracell, and intercell) controlled by the BSC module the same module transmits the voice signal starting from its Asub interface both towards the old channel (BTS1 or BTS "serving" block), and towards the new channel (BTS2 or BTS "target" block).

On receipt of the CHANNEL ACTIVATION ACK message for the channels enabled in the handover phase controlled by the BSC module, the BSC sends data starting from the Asub time slot in addition to the old channel and to the Abis time slot connected to the new channel.

When - on receipt of the HANDOVER COMMAND message - the mobile terminal MT switches on the new channel, the data of the downlink connection are already available. If the handover is not successful, the BSC module must cancel the Asub-Abis connection on the disengagement or clearance of the new channel.

The BTSE module keeps this strategy into account in the TRAU inter work phase. The CHANNEL ACTIVATION ACK message is sent by the BTS module towards the BSC module to confirm the fact that the enabling of the requested channel has been correctly completed (see also the GSM TS08.58 standard).

Of course, keeping as firm the principle of the invention, the implementation details and shapes could be widely varied compared to what described and shown without departing from the appended claims.

## Claims

1. Method to control a handover method in a mobile telecommunication network, said handover method being performed by a mobile station (MT) in a first (t0, t1) and in a second time slot (t1, t2) in which said mobile station is respectively connected on a first channel destined to be abandoned due to the handover operation and on a second channel destined to be reached due to the handover action, **characterized in that** it includes the operation to keep the voice signal (VS) transmission on said first channel during said first time slot (t0, t1).

2. Method according to claim 1, **characterized in that** it includes the operation to produce a continuity solution in said voice signal (VS) during said second time slot (t1, t2) only.

3. Method according to claim 1, **characterized in that** it includes the operation to detect, at the end (t1) of said first time slot (t0, t1), the result of the handover method and the operation to keep said voice signal (VS) connected on said first channel when the handover operation in unsuccessful.

4. Method according to any of the previous claims, applied to a handover intracell operation in a GSM network, said handover method performing with the sending of an ASSIGNMENT COMMAND message towards the mobile station (MS) to enable the assignment method of said second channel and the emission of an ESTABLISH INDICATION message to indicate the establishment of a radio link layer connection in a multiframe mode started by a mobile station (MS), **characterized in that** it includes the operation to transfer the switching matrix at the instant the ESTABLISH INDICATION message is received.

5. Method according to any claim 1 to 3, applied to an intercell handover method of a GSM system, said handover method involving the emission of a HANDOVER COMMAND message towards the mobile station (MS) and the emission of a HANDOVER DETECTION message towards the BSC module, **characterized in that** said method involves the transfer of the switching matrix on the reception instant of the HANDOVER DETECTION message.

6. Method according to any of the previous claims, applied to a handover method performed under the control of a BSC module in a GSM network, said BSC module including an Asub interface, **characterized in that** it includes the operation to transmit the voice signal (VS) starting from said Asub interface both to said first and to said second channel.

7. Method according to claim 6, **characterized in that** said BSC module sends the data relevant to said voice signal (VS) starting from the time slot of said Asub interface both to said first channel and to the Abis time slot of said second channel.

8. Method according to claim 6 or claim 7, **characterized in that** it includes the operation to detect the result of said handover method and the operation to cancel the Asub-Abis connection at the clearing of said second channel.

9. Mobile telecommunication system configured to operate with the method according to any claim 1 through 8.

10. Data processing product to be directly loaded in the memory of a computer including portions of software code implementing the method according to any claim 1 to 8 when the product is run on a computer.
